# EUROPEAN PATENT APPLICATION

(11) **EP 2 767 851 A2**
(43) Date of publication of application: **20.08.2014**
(21) Application number: 14155544.1
(22) Date of filing: 18.02.2014
(51) Int. Cl.: G01V 3/12

(54) **An object detector**

(30) Priority: 18.02.2013 GB 201302809
(71) Applicant: ROKE MANOR RESEARCH LIMITED, Romsey, Hampshire SO51 0ZN (GB)
(72) Inventor: Gannaway, Julian, Romsey, Hampshire SO51 0ZN (GB); Richardson, Christopher Keith, Romsey, Hampshire SO51 0ZN (GB); McDonald, Tony, Romsey, Hampshire SO51 0ZN (GB)
(74) Representative: Thompson, Andrew John

(57) **Abstract**

An object detector (10) comprising: a transmitter (12) arranged to generate a transmit signal; a transmit loop antenna (16), coupled to said transmitter and arranged to radiate said transmit signal; and a receive loop antenna (20) arranged to generate a receive signal from received radio waves; wherein said received radio waves include said radiated transmit signal and, in the presence of objects within range of the device which reradiate said transmit signal, one or more radio waves reradiated by such objects; said receive signal includes a component corresponding to said transmit signal and, in the presence of reradiated radio waves, one or more components corresponding to said reradiated radio waves; and said object detector further comprises a signal detector, coupled to said receive loop antenna and said transmitter, the signal detector arranged to detect changes in the amplitude and/or phase of said receive signal which are due to changes in said components corresponding to said reradiated radio waves.

## Description

### Field of the Invention

The present invention relates to an object detector. In particular, embodiments of the present invention relate to an object detector which is suitable for detecting buried elongate conductive objects.

### Background

Detectors suitable for detecting buried objects are well-known in the art. For example, UK Patent Application published under number GB2280270A, in the name of Roke Manor Research Limited, discloses a detector of buried elongate conductive objects which includes two receive loops. The detector is arranged to cancel background noise which propagates in the horizontal plane, but to detect signals radiated from an elongate buried conductor which propagate in the vertical plane. It is useful when undertaking ground works of any kind, for example, whether it be for utility use, farming, geological, archaeological or other purposes, to know of any existing infrastructure, for example pipes and cables buried in the ground. There is a particular need for detectors which could operate over a range of several metres. Longer detection range means that less surveying time is required for a given area of ground. Furthermore, there is a need for detectors which are less susceptible to electromagnetic interference and which are more reliable in operation, and reduce the probability of false detections.

It is an object of the present invention to provide an object detector which addresses the aforementioned issues.

### Summary of the Invention

In a first aspect, the present invention provides an object detector comprising: a transmitter arranged to generate a transmit signal; a transmit loop antenna, coupled to said transmitter and arranged to radiate said transmit signal; and a receive loop antenna arranged to generate a receive signal from received radio waves; wherein said received radio waves include said radiated transmit signal and, in the presence of objects within range of the device which reradiate said transmit signal, one or more radio waves reradiated by such objects; said receive signal includes a component corresponding to said transmit signal and, in the presence of reradiated radio waves, one or more components corresponding to said reradiated radio waves; and said object detector further comprises a signal detector, coupled to said receive loop antenna and said transmitter, the signal detector arranged to detect changes in the amplitude and/or phase of said receive signal which are due to changes in said components corresponding to said reradiated radio waves.

In a second aspect a method of object detection using an object detector comprising: a transmitter arranged to generate a transmit signal; a transmit loop antenna, coupled to said transmitter and arranged to radiate said transmit signal; and a receive loop antenna arranged to generate a receive signal from received radio waves; and a signal detector, coupled to said receive loop antenna and said transmitter, the method comprising: generating and transmitting said transmit signal; receiving, at said receive loop antenna, radio waves including said radiated transmit signal and, in the presence of objects within range of the device which reradiate said transmit signal, one or more radio waves reradiated by such objects; generating a receive signal, at an output of said receive loop antenna, including a component corresponding to said transmit signal and, in the presence of reradiated radio waves, one or more components corresponding to said reradiated radio waves; and detecting, using said signal detector, changes in the amplitude and/or phase of said receive signal which are due to changes in said components corresponding to said reradiated radio waves.

Further features of embodiments of the invention are recited in the appended claims.

### Brief Description of the Drawings

The present invention will now be described, by way of example only, and with reference to the accompanying drawings in which:
Figure 1 is a schematic diagram of an object detector in accordance with an embodiment of the present invention;
Figure 2 is a plan view of the detector shown in Figure 1 in use; and
Figure 3 is a schematic diagram of an object detector in accordance with a further embodiment of the present invention.

### Description of the Embodiments of the Invention

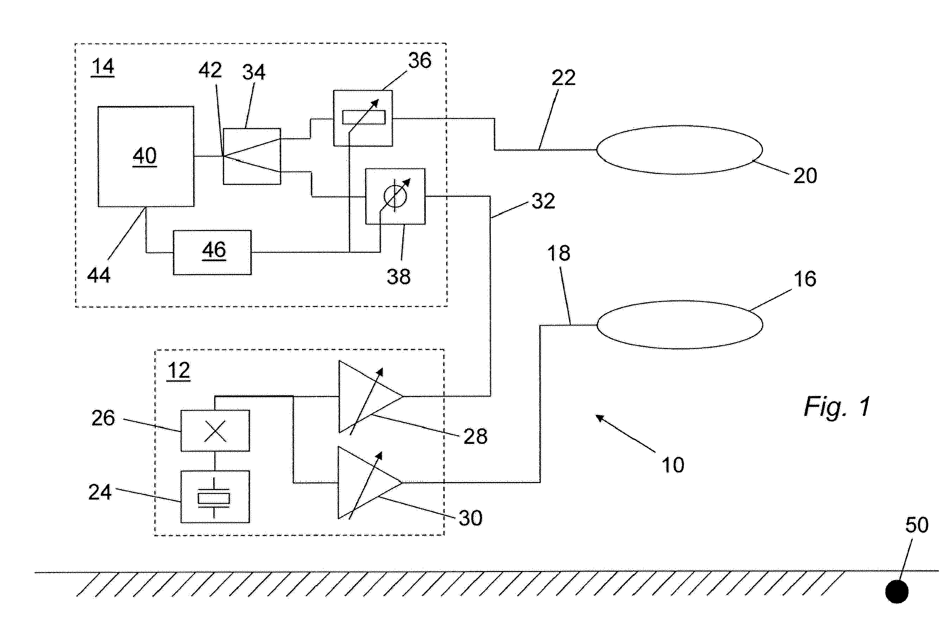

Figure 1 is a schematic diagram of an object detector 10 in accordance with an embodiment of the present invention. The object detector 10 includes a transmitter subsystem 12 and a receive combining subsystem 14. The transmitter subsystem 12 is coupled to a transmit loop antenna 16 via cable 18. The receive combining subsystem 14 is coupled to a receive loop antenna 20 by cable 22. The transmitter subsystem 12 is arranged to generate a high power RF signal which is radiated by the transmit loop antenna 16. In particular, the transmitter subsystem 12 is arranged to generate a continuous RF signal, rather than a pulsed signal. The transmit loop antenna 16 generates a radio frequency magnetic near-field. This magnetic near-field induces currents in elongate conductive objects. The induced current causes the elongate conductive objects to re-radiate the signal as their own magnetic near-field. The receive loop antenna 20 is arranged to receive both the magnetic near-field generated by the transmit loop antenna, and the magnetic near-field generated by the elongate object.

Although not shown in Figure 1, both of the loop antennas 16, 20 are horizontal, i.e. the plane of each loop is parallel to the ground surface. Furthermore, both loops are circular when viewed from above. The loops are arranged such that their axes are aligned with each other, with the receive loop antenna 20 being positioned vertically above the transmit loop antenna 16. The distance of separation between the loops will depend on the frequency of operation and the desired range of the device. However, the loops may typically be positioned between 30cm and 100cm apart.

The transmit signal is generated by oscillator 24 and frequency multiplier 26. The oscillator 24 and frequency multiplier 26 may be adjusted to provide a transmit signal of the required frequency. The output of the frequency multiplier 26 is fed to variable gain amplifiers 28, 30 which may be adjusted to provide a transmit signal with the required amplitude. Variable gain amplifier 30 produces a transmit signal at its output which is fed to the transmit loop antenna 16 via line 18. Variable gain amplifier 28 produces a corresponding transmit signal which is fed to the receive combining subsystem 14 via line 32.

The receive combining subsystem 14 includes an RF combiner 34. The RF combiner 34 is essentially arranged to combine a signal output from the receive loop antenna 20 and the transmit signal received from the transmitter subsystem 12 via line 32. The received combining subsystem 14 also includes a variable attenuator 36. The variable attenuator 36 is coupled between line 22 (which is coupled to the receive loop antenna 20) and the RF combiner 34. The variable attenuator 36 is arranged to control the amplitude of the signal which is output from the receive loop antenna 20. The manner in which the attenuator is controlled will be described below. The receive combining system 14 also includes a variable phase shifter 38. The variable phase shifter 38 is coupled between the line 32 and the RF combiner 34. The variable phase shifter 38 is arranged to control the phase of the transmit signal. The manner in which the variable phase shifter 38 is controlled will be described in more detail below.

The receive combining system 14 also includes a receiver 40. The receiver 40 is coupled to an output 42 of the RF combiner 34. The receiver 40 generates a baseband output signal via output 44.

The receive combining system 14 includes a feedback mechanism which includes automatic control unit 46. The automatic control unit 46 is coupled to the output 44 of the receiver 40. The output of the automatic control unit 46 is coupled to variable attenuator 36 and variable phase shifter 38.

The operation of the object detector shown in Figure 1 will now be described.

As noted above, in use, the transmitter subsystem 12 is arranged to generate a continuous transmit signal which is fed to transmit loop antenna 16 in order to generate a radiated signal. The transmit loop antenna 16 therefore generates a continuous magnetic near-field. A corresponding transmit signal is fed via line 32 to the receive combining subsystem 14. The receive loop antenna 20 receives both a direct signal via the magnetic near-field from the transmit loop 16 and a magnetic near-field signal reradiated from buried elongate conducting objects. In the absence of any elongate conducting objects, the output signal generated by receive loop antenna 20 will be very similar to the transmit signal which is fed to the receive combining subsystem 14 via line 32. The automatic control unit 46 is arranged to control the variable attenuator 36 and the variable phase shifter 38 such that the output 44 of receiver 40 is minimised. Assuming ideal conditions, with no background noise, it is possible to adjust the signals from the receive loop antenna 20 and the transmitter subsystem 12 such that there is no output from the receiver. As the device 10 moves over the ground, and owing to changes in background noise, the output from the receive loop antenna 20 will vary. The automatic control unit 46 is arranged to continuously adjust the variable attenuator 36 and the variable phase shifter 38 in order to minimise the output from receiver 40. Once the buried elongate conducting object comes into range of the device, the object will reradiate the radiated signal. This will cause a significant change in the output from receive loop antenna 20. In such circumstances, the automatic control unit 46 will have to work very hard to minimise the output from receiver 40. The automatic control unit 46 is arranged so that when the degree of correction required to minimise the output of receiver 40 at either the variable attenuator 36 or the variable phase shifter 38 exceeds a certain predetermined threshold, an alarm is triggered to indicate to the user the likely presence of a buried elongate conducting object.

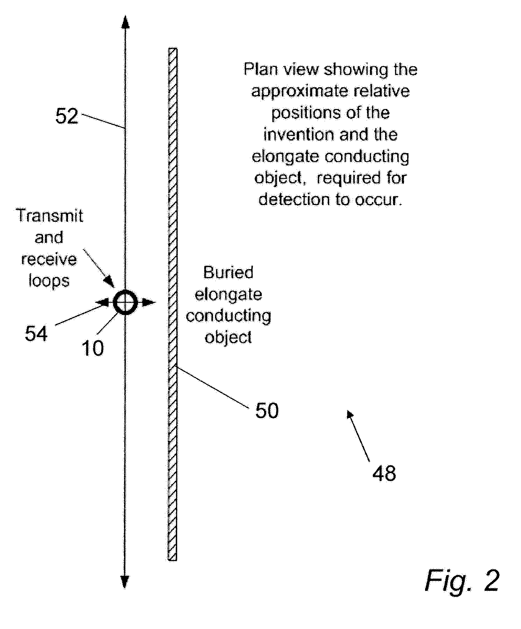

Figure 2 shows a plan view of an open area 48 under which an elongate conductive object 50 is buried. The arrows 52, 54 show the area in which the detector 10 may be positioned in order to detect the object 50. The detector 10 is most effective when positioned halfway along the buried object 50. Furthermore, the detector 10 is most effective when the object 50 has a length which is half a wavelength, taking into account the dielectric effects of the ground, at the operating frequency of the detector 10. Figure 2 is not to scale, and at best, show approximate dimensions of a buried object 50 suitable for detection by detector 10.

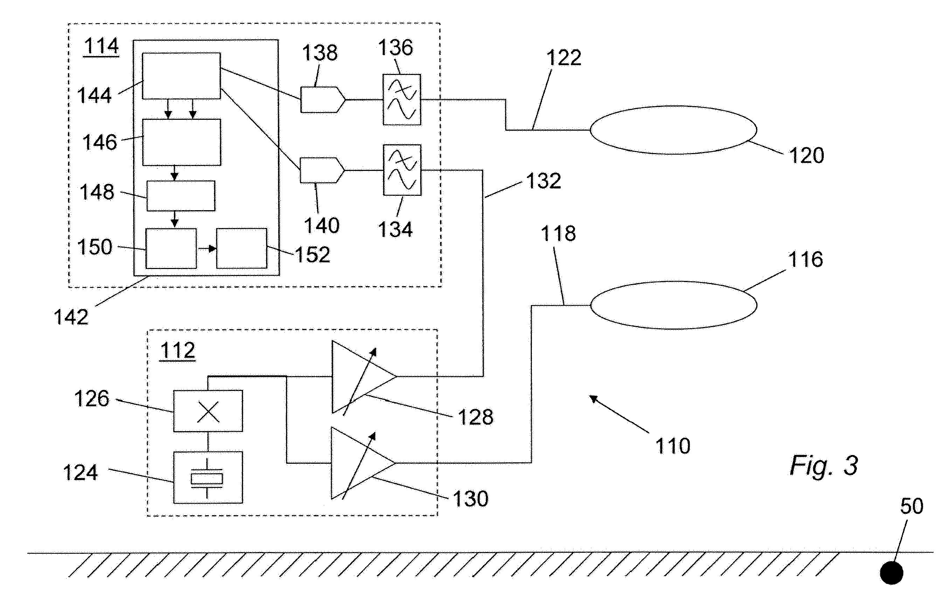

Figure 3 is a schematic diagram of an object detector 110 in accordance with a further embodiment of the present invention. The object detector 10 described above uses analogue components. The object detector 110 uses digital components.

The object detector 110 includes a transmitter subsystem 112. The transmitter subsystem 112 is essentially the same as the transmitter subsystem 12 described above in connection with Figure 1. The object detector 110 also includes receiver subsystem 114. The transmitter subsystem 112 is coupled to a transmit loop antenna 116 via cable 118. The receiver subsystem 114 is coupled to a receive loop antenna 120 by cable 122. The transmitter subsystem 112 is arranged to generate a high power RF signal which is radiated by the transmit loop antenna 116. In particular, the transmitter subsystem is arranged to generate a continuous RF signal, rather than a pulsed signal. The transmit loop antenna 16 generates a radio frequency magnetic near-field. This magnetic near-field induces currents in elongate conductive objects. The induced current causes the elongate conductive objects to re-radiate the signal as their own magnetic near-field. The receive loop antenna 120 is arranged to receive both the magnetic near-field generated by the transmit loop antenna 116, and the magnetic near-field generated by the elongate object.

Although not shown in Figure 3, both of the loop antennas 116, 120 are horizontal, i.e. the plane of each loop is parallel to the ground surface. Furthermore, both loops are circular when viewed from above. The loops are arranged such that their axes are aligned with each other, with the receive loop antenna 120 being positioned vertically above the transmit loop antenna 116. The distance of separation between the loops will depend on the frequency of operation and the desired range of the device. However, the loops may typically be positioned between 30cm and 100cm apart.

The transmit signal is generated by oscillator 124 and frequency multiplier 126. The oscillator 124 and frequency multiplier 126 may be adjusted to provide a transmit signal of the required frequency. The output of the frequency multiplier 126 is fed to variable gain amplifiers 128, 130 which may be adjusted to provide a transmit signal with the required amplitude. Variable gain amplifier 130 produces a transmit signal at its output which is fed to the transmit loop antenna 116 via line 118. Variable gain amplifier 128 produces a corresponding transmit signal which is fed to the receiver subsystem 114 via line 132.

The receiver subsystem 114 includes a low pass filter (LPF) 134 and a LPF 136. LPF 136 is coupled to the receive antenna 120. LPF 134 is coupled to transmitter 112. The receiver subsystem 114 includes an analogue to digital converter (ADC) 138 which is coupled to the output of LPF 136 and an ADC 140 which is coupled to the output of LPF 134. The outputs of ADC 138 and 140 are fed to digital processing system (DPS) 142. The DPS 142 may be implemented as a field-programmable gate array (FPGA), a microcontroller, personal computer, or combination thereof.

The DPS 142 includes a measurement module 144 which measures the amplitude and phase of the signals output from ADCs 138 and 140. These measurements are fed to an extraction module 146 which extracts the transmit signal from the receive signal. At this point, the amplitude and phase variations due to system components are cancelled, leaving variations in amplitude and phase due to the environment. The resulting signal is fed to a digital LPF 148 (and/or a high pass filter). The output of LPF 148 is fed to a data logger 150. The output of data logger 150 is fed to threshold detector module 152.

The operation of the object detector shown in Figure 3 will now be described.

As noted above, in use, the transmitter subsystem 112 is arranged to generate a continuous transmit signal which is fed to transmit loop antenna 116 in order to generate a radiated signal. The transmit loop antenna 116 therefore generates a continuous magnetic near-field. A corresponding transmit signal is fed via line 132 to the receiver subsystem 114. The receive loop antenna 120 receives both a direct signal via the magnetic near-field from the transmit loop 116 and a magnetic near-field signal reradiated from buried elongate conducting objects. In the absence of any elongate conducting objects, the output signal generated by receive loop antenna 120 will be very similar to the transmit signal which is fed to the receive combining subsystem 114 via line 132.

Assuming ideal conditions, with no background noise and no shift in the transmitter output, the signal received by threshold detector module 152 will be zero. As the device 110 moves over the ground, and owing to changes in background noise, the output from the receive loop antenna 120 will vary. Once a buried elongate conductive object comes into range of the device, the object will reradiate the radiated signal. This will cause a significant change in the output from receive loop antenna 120. In such circumstances, a signal will be received by threshold detector module 152. When the signal exceeds a certain predetermined threshold, or the rate of change of the signal exceeds a certain threshold, a user perceivable alarm is triggered to indicate to the user the likely presence of a buried elongate conducting object. A user perceivable output may a visual output, such as a light, or an audible output, such as an alarm.

While Figures 1 and 3 show an embodiment in which the transmit and receive loops are positioned one above the other, the detector may also work with the loops positioned side-by-side. It may also be possible for the detector to operate with multiple transmit and receive antenna loops.

The buried elongate conductive object 50 is also shown in Figures 1 and 3, although it should be noted that these Figures are not to scale.

The above-described embodiment is described as one example of the present invention. The skilled person will appreciate that variations may be made without departing from the spirit and scope of the claimed invention.

While the claims provide for a particular combination of features, the skilled person will appreciate that other combinations are possible.

In the above-described embodiments, the transmitter subsystem has been described as generating a continuous signal. In this context, a continuous signal is one that is not pulsed. However, it will be appreciated that the continuous signal may be turned off, and back on, from time-to-time. For example, this may be done as a method of reducing average system power consumption. The present invention does not however require the signal to be pulsed in order to function.

There are three notable differences between the present invention and RADAR-type systems. Firstly, in the present invention, the continuous transmit signal generates a continuous magnetic field, which may be continuously monitored by the receive combining subsystem. That is to say, the system is transmitting and receiving at the same time on a continuous basis. The reception of the magnetic near-field from the elongate object, and that from the transmit loop, occurs at a similar point in time with negligible delay. This is in contrast to a RADAR-type system, in which a signal pulse is generated, and after a time period corresponding to the return propagation delay, the pulse is received. The propagation delay in such a system is significant and measurable. The RADAR-type system determines the presence of the target from the time delay, and other characteristics, of the received signal. Most notably and in contrast to the present invention, the RADAR-type system transmits and receives at separate instances in time.

Secondly, there is a difference relating to the RF wavelength in use. In a RADAR-type systems, the distance to the target is long compared to the wavelength. This is in contrast to the present invention, where the distance between the system and the object is short compared to the wavelength.

Thirdly, there is a difference in the RF field distribution. A RADAR-type system uses a freely propagating electromagnetic wave, in which the electric and magnetic components exist at a constant ratio, which is independent of distance. This is a consequence of the system operating in the far-field, with several cycles of the wave existing between the system and the target. In the present invention, the situation is quite different. Firstly, only the magnetic component of the RF field is used. Secondly, this component is utilised in the near-field region, where the relationship and distribution of the electric and magnetic components of the field varies with position with respect to the loop antennas and the elongate conducting object.

## Claims

1. An object detector, comprising:
a transmitter arranged to generate a transmit signal;
a transmit loop antenna, coupled to said transmitter and arranged to radiate said transmit signal; and
a receive loop antenna arranged to generate a receive signal from received radio waves; wherein
said received radio waves include said radiated transmit signal and, in the presence of objects within range of the device which reradiate said transmit signal, one or more radio waves reradiated by such objects;
said receive signal includes a component corresponding to said transmit signal and, in the presence of reradiated radio waves, one or more components corresponding to said reradiated radio waves; and
said object detector further comprises a signal detector, coupled to said receive loop antenna and said transmitter, the signal detector arranged to detect changes in the amplitude and/or phase of said receive signal which are due to changes in said components corresponding to said reradiated radio waves.

2. An object detector according to claim 1, wherein said transmitter is arranged to generate a continuous transmit signal.

3. An object detector according to claims 1 or 2, wherein the signal detector is further arranged to determine when said changes in, and/or when a rate of change in, amplitude and/or phase exceed a predetermined threshold.

4. An object detector according to claim 1, wherein said signal detector comprises a combiner, said combiner coupled to said transmitter and said receive loop antenna, wherein said transmit signal and said receive signal are arranged to be fed to said combiner, and said combiner is arranged to combine said transmit signal and said receive signal and to generate a combined output signal.

5. An object detector according to claim 4, wherein said signal detector is further arranged to adjust said transmit signal and/or said receive signal in order to minimise said combined output signal.

6. An object detector according to claim 5, wherein said signal detector is further arranged to determine when the amount of adjustment and/or rate of change of said adjustment required to minimise said combined output signal exceeds a predetermined threshold.

7. An object detector according to claim 6, wherein the signal detector further comprises a variable attenuator and/or a variable phase shifter, coupled between the receive antenna and the combiner, and/or the transmitter and the combiner; and said signal detector is further arranged to apply said adjustments using said variable attenuator and/or said variable phase shifter to minimise the output of the combiner.

8. An object detector according to claim 7, wherein the signal detector further comprises a receiver, coupled to the output of the combiner; the variable phase shifter is coupled to a baseband output of the receiver; the variable attenuator is coupled to a baseband output of the receiver; and the signal at the combiner output is minimised by monitoring a baseband output of the receiver.

9. An object detector according to claim 1, wherein said signal detector is further arranged to extract said component corresponding to said transmit signal from said received signal and to generate a detection signal; said signal detector is further arranged to determine when the amplitude and/or phase of said detection signal exceed a predetermined threshold; and said signal detector is further arranged to determine when the rate of change of the amplitude and/or phase of said detection signal exceeds a predetermined threshold.

10. An object detector according to any preceding claim, wherein the detector is for detecting elongate objects.

11. An object detector according to claim 10, wherein the detector is for detecting buried elongate conductive objects.

12. An object detector according to claim 3, wherein the signal detector is further arranged to provide a user perceivable output when it is determined that a predetermined threshold is exceeded.

13. An object detector according to any preceding claim, wherein said transmit loop antenna is further arranged to generate a continuous magnetic near-field, and the receive loop antenna is further arranged to generate said receive signal from a received magnetic near-field, wherein the received magnetic near-field includes said transmitted magnetic near-field and magnetic near-fields reradiated by any objects within range of the device.

14. A method of object detection using an object detector comprising: an object detector, comprising: a transmitter arranged to generate a transmit signal; a transmit loop antenna, coupled to said transmitter and arranged to radiate said transmit signal; and a receive loop antenna arranged to generate a receive signal from received radio waves; and a signal detector, coupled to said receive loop antenna and said transmitter, the method comprising:
generating and transmitting said transmit signal;
receiving, at said receive loop antenna, radio waves including said radiated transmit signal and, in the presence of objects within range of the device which reradiate said transmit signal, one or more radio waves reradiated by such objects;
generating a receive signal, at an output of said receive loop antenna, including a component corresponding to said transmit signal and, in the presence of reradiated radio waves, one or more components corresponding to said reradiated radio waves; and
detecting, using said signal detector, changes in the amplitude and/or phase of said receive signal which are due to changes in said components corresponding to said reradiated radio waves.

15. A method of object detection according to claim 14, further comprising determining when said changes in, and/or a rate of change in, amplitude and/or phase exceed a predetermined threshold.
